Europäisches Patentamt

European Patent Office

Office européen des brevets

(11) Numéro de publication: **0 1 3 4 1 7 2**
**B1**

(12) **FASCICULE DE BREVET EUROPEEN**

(45) Date de publication du fascicule du brevet:
**24.05.89**

(21) Numéro de dépôt: **84401618.8**

(22) Date de dépôt: **02.08.84**

(51) Int. Cl.⁴: **C 03 B 27/04,** B 05 B 7/30

(54) **Trempe de volumes de verre par jet diphasique.**

(30) Priorité: **05.08.83 FR 8312989**

(43) Date de publication de la demande:
**13.03.85 Bulletin 85/11**

(45) Mention de la délivrance du brevet:
**24.05.89 Bulletin 89/21**

(84) Etats contractants désignés:
**BE DE FR GB IT SE**

(56) Documents cités:
**FR-A- 792 280**
**FR-A- 972 165**
**FR-A- 2 291 800**

(73) Titulaire: **SAINT-GOBAIN VITRAGE, Les
Miroirs 18, avenue d'Alsace, F-92400 Courbevoie (FR)**

(72) Inventeur: **Colmon, Daniel, 6 Place du Colonel Fabien,
F-60150 Thourotte (FR)**
Inventeur: **Letemps, Bernard, 5 avenue Gros Buisson,
F-60150Thourotte (FR)**

(74) Mandataire: **Leconte, Jean-Gérard et al, Saint-Gobain
Recherche 39, Quai Lucien Lefranc,
F-93304 Aubervilliers Cedex (FR)**

EP 0 134 172 B1

ACTORUM AG

Description

La présente invention se rapporte à la trempe thermique du verre dans des installations de trempe où le verre est soumis à l'action d'un jet gazeux. De façon générale, l'invention peut concerner la trempe verticale ou la trempe horizontale de volumes de verre. Actuellement, et notamment en matière de vitrages automobiles, on rencontre des réglementations particulièrement sévères visant à garantir aux utilisateurs une marge de sécurité suffisante. Des techniques de trempe de plus en plus performantes sont nécessaires pour rendre le verre suffisamment résistant pour satisfaire notamment au règlement n° 43 résultant de l'accord des Nations Unies sur les conditions uniformes d'homologation et la reconnaissance réciproque de l'homologation des équipements et pièces de véhicules à moteur.

Les réglementations requièrent qu'après fracture du vitrage, le nombre des fragments de verre contenus dans un carré 5 × 5 cm à plus de 7,5 cm du point d'impact soit compris entre 40 et 350, les fragments ne dépassent pas 3 cm$^2$ en surface, sauf éventuellement dans un rayon de 7,5 cm autour du point d'impact, et que les fragments de forme allongée qui peuvent exister n'aient pas plus de 7,5 cm de longueur.

De façon habituelle, pour rendre des feuilles de verre plus résistantes afin de répondre aux réglementations, on les chauffe à une température proche de la température de ramollisement du verre, puis on les refroidit rapidement en soufflant de l'air simultanément sur les deux faces de la feuille, à une vitesse de l'ordre de 200 m/s, avec des débits très importants, pouvant aller jusqu'à 1200 m$^3$ par m$^2$ de verre et par minute, mesurés dans des conditions normales, c'est à dire à 0 °C et sous pression atmosphérique.

On a cherché divers moyens d'améliorer les performances de ce procédé, à savoir augmenter la vitesse de refroidissement du verre, ce qui favorise l'augmentation de résistance mécanique souhaitée: le refroidissement provoque l'établissement de gradients de température entre le centre et la surface du verre, dans toute l'épaisseur de la feuille de verre, ces gradients se maintenant alors que le verre se refroidit au passage de son point de recuit, si bien que des contraintes permanentes de compression sont établies dans les couches superficielles de la feuille de verre, les contraintes latérales se compensant au centre de la feuille.

On peut par exemple augmenter le débit d'air, mais on est limité dans cette voie car se pose en contrepartie le problème, quelles que soient les dimensions des vitrages traités, de l'évacuation de l'air soufflé, qui doit être menée sans risque de perturbation du soufflage. Il est nécessaire de maintenir dans l'installation la surface libre nécessaire à l'évacuation de l'air soufflé ainsi qu'à celle des calories enlevées par lui au verre. Compte-tenu des installations actuelles, où les équipements de support du verre ainsi que les buses de soufflage occupent déjà une surface importante, une augmentation du débit, accompagnée d'une augmentation de l'encombrement dû aux buses et à l'air soufflé, réduirait encore l'espace disponible à l'évacuation et nuirait à l'efficacité du refroidissement.

On a cherché par ailleurs à faire varier les jets d'air dans le temps et dans l'espace (pulsation des jets, oscillation des dispositifs de soufflage. . .) ou à surdensifier le soufflage de certaines zones (alternance de bandes à trempe forte et de bandes à trempe plus faible). Mais cette complication des moyens mis en œuvre n'a servi qu'à abaisser, après fracture du vitrage, le nombre d'aiguilles, c'est-à-dire de fragments de plus de 7,5 cm de long.

On connaît également, par le brevet FR-A-792 260, un procédé pour la trempe d'objets en verre selon lequel on introduit dans un jet d'air de l'eau, ce qui conduit à un mélange d'air et d'eau pulvérisée, l'eau se vaporisant ensuite lors de sa projection sur le verre.

Enfin, connaissant la relation approximative de proportionnalité entre l'échange thermique entre l'air et le verre à refroidir et la vitesse de cet air, on a également cherché à augmenter la pression d'alimentation des buses de soufflage pour tenter d'obtenir des vitesses d'air plus importantes. On a ainsi appliqué des pressions qui autorisent des vitesses soniques, voire supersoniques. Toutefois on accroît considérablement les dépenses d'énergie, du fait notamment des pertes de charges inévitables, et les coûts de fabrication tendent à devenir incompatibles avec une fabrication industrielle.

Par ailleurs, on cherche de plus en plus actuellement à réduire le poids des voitures, et une voie logique pour tendre à ce but consiste à envisager l'utilisation de vitrages plus minces, d'une épaisseur de 3 mm environ, ou même moins. Pour garantir une bonne résistance mécanique de ces vitrages, il est nécessaire de procéder à un refroidissement plus intense et donc de développer des méthodes de trempe plus performantes.

La présente invention vise à augmenter la vitesse de refroidissement du verre au cours du processus de trempe, tout en évitant les inconvénients des méthodes précitées. En particulier, elle peut être appliquée au cas des feuilles de verre relativement minces, d'une épaisseur inférieure à 3 mm environ.

Le procédé de trempe de volume de verre, selon l'invention, consiste à souffler un jet, par des tuyères, sur au moins une des faces des volumes de verre, ledit jet comprenant un gaz et de l'eau. Selon ce procédé, on alimente les tuyères, d'une part, en gaz sous une pression au moins égale à 0,910 bar qui autorise une vitesse au moins sonique du jet à la sortie des tuyères, d'autre part, en eau. On atomise l'eau, lors de son passage dans les tuyères, par traversée d'une onde de choc produite à l'inférieur de tuyères; l'alimentation en eau a lieu légèrement en amont du lieu où se produit l'onde de choc et le débit de l'eau injectée est réglé de façon à se placer à la limite du régime non mouillant et du régime mouillant.

Selon l'invention, on souffle sur le verre un mélange possédant une chaleur spécifique accrue par rapport au jet gazeux, généralement d'air, habituellement utilisé. Un tel mélange, soufflé par ailleurs avec une pression telle qu'il atteigne le verre avec une vitesse au moins sonique, peut pomper plus rapidement les calories du verre et par conséquent, le refroidissant plus rapidement, augmenter la résistance mécanique du vitrage.

Selon l'invention, on souffle sur le verre un jet gazeux, généralement de l'air, contenant un liquid, dans un état ne risquant pas de perturber le soufflage ou d'endommager le vitrage, avec une pression telle que le jet diphasique atteigne le verre avec une vitesse au moins sonique.

Le liquide employé est de l'eau soufflée avec le gaz sur le verre alors qu'elle se trouve dans un état atomisé, c'est-à-dire que les particules de liquide formées sont extrêmement fines.

Divers impératifs sont à respecter pour un bon fonctionnement du procédé selon l'invention: à la sortie du four, juste avant sa trempe, le verre est à une température de l'ordre de 650 °C, à laquelle il est particulièrement fragile. La moindre goutte de liquide entrant en contact avec le verre à cette température provoque sa casse.

Notamment, dans le cas d'application du procédé selon l'invention à la trempe horizontale de volumes de verre, il apparaît des risques de coalescence ou de chutes incontrôlées de gouttes sur le verre. Il faut donc éviter tout contact de surface entre le verre et le liquide et faire en sorte que le liquide soit présent sous forme finement divisée, ou encore atomisée, réparti de façon homogène dans le gaz et pour cela on réalise, selon l'invention, une atomisation de ce liquide. Pour éviter les risques précités, il est avantageux, selon l'invention, de se placer en deçà du régime mouillant et pour un meilleur rendement en limite du régime non mouillant et mouillant.

Le procédé selon l'invention permet, en particulier, de se placer à une plus grande distance du volume de verre, pour réaliser la trempe, grâce à la valeur élevée du coefficient d'échange thermique entre le verre et le jet projeté contre le verre: ledit coefficient est en effet augmenté d'une part par la présence de particules liquides, d'autre part par la vitesse du jet.

Différents moyens peuvent être mis en œuvre pour l'atomisation du liquide. On peut par exemple utiliser une buse de soufflage du jet gazeux dans laquelle le gaz entre de façon tangentielle par rapport à la buse, et est alors soumis à un mouvement tourbillonnaire; le liquide, pénétrant au sein de ce tourbillon, se trouve alors atomisé.

On a trouvé qu'une tuyère d'un genre particulier, dite tuyère de Laval, présentait une conformation convenant particulièrement bien pour la mise en œuvre du procédé selon l'invention. Cette tuyère est remarquable notamment en ce qu'elle a la forme d'un double cône, l'un convergent, l'autre divergent. Les calculs d'hydrodynamique en régime sonique montrent qu'au niveau du col de la tuyère, c'est-à-dire de la jonction entre le cône convergent et le cône divergent qui le prolonge, il se forme une onde de choc.

Une telle tuyère présente un certain nombre d'avantages pour la mise en œuvre du procédé selon l'invention; ainsi, il n'est pas nécessaire de procéder d'une part à l'atomisation du liquide, et d'autre part à la formation d'un courant gazeux sonique. En choisissant convenablement la position d'injection du liquide, on profite directement de la formation de l'onde de choc pour atomiser le liquide.

En traversant cette onde, le liquide, soumis à une très brusque variation de pression, se trouve littéralement atomisé.

Avantageusement, l'invention propose de brancher l'arrivée de liquide légèrement en amont du lieu où se produit l'onde de choc. Le liquide se trouve pratiquement immédiatement atomisé, et le mélange gaz-liquide atomisé poursuit son trajet dans la tuyère sans pertes de charges notables, puis est éjecté à une vitesse au moins sonique, garantissant ainsi les meilleures conditions de refroidissement du verre.

Entre le lieu de formation de l'onde de choc et la sortie de la tuyère, le mélange gaz-liquide atomisé à le temps de s'homogénéiser, ce qui diminue encore les risques de détérioration du verre.

L'invention sera décrite plus en détails dans sa réalisation à l'aide des dessins qui représentent:

– figure 1: un schéma de montage d'un dispositif de trempe verticale de feuille de verre par soufflage d'un jet diphasique.

– figure 2: un schéma de montage d'un dispositif de trempe horizontale de feuilles de verre par soufflage d'un jet diphasique,

– figure 3a: une coupe schématique d'une tuyère de Laval,

– figure 3b: une vue de profil d'une tuyère de Laval,

– figure 4: un exemple de réalisation d'un montage permettant la formation d'un jet diphasique.

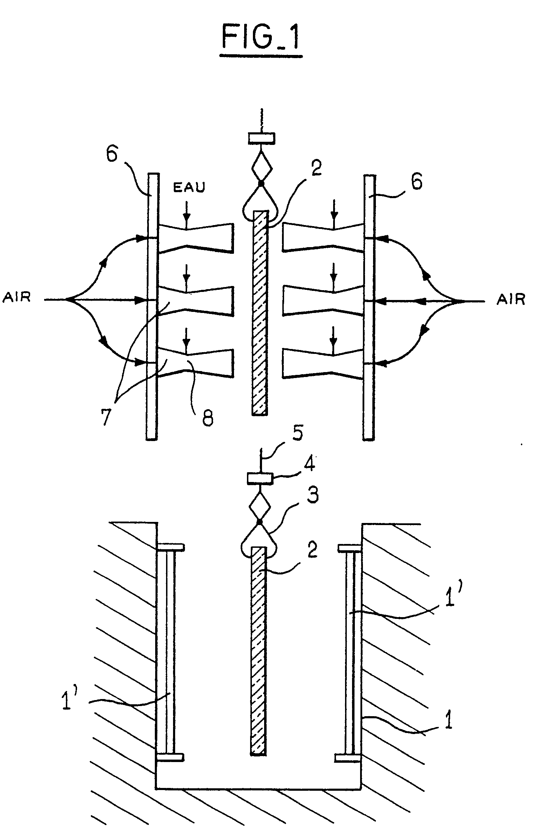

L'installation représentée sur la figure 1 est de type classique et elle comprend un four 1 de chauffage d'une feuille de verre 2 qui doit être trempée. La feuille 2 est portée par des pinces 3 suspendues à une barre 4. Celle-ci est elle-même suspendue par des fils 5 à un dispositif convenable de levage de type connu.

Le chauffage de la feuille 2, lorsqu'elle est suspendue à la barre 4 dans le four 1 est assuré par les radiations des éléments 1' de chauffage montés sur les parois opposées du four 1 en face de la feuille 2.

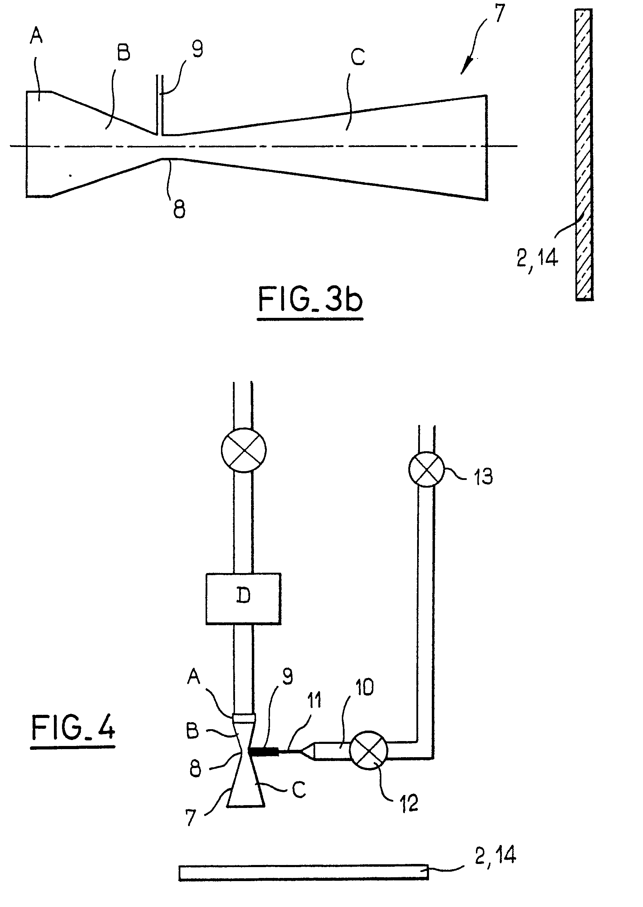

A la sortie du dispositif de chauffage, la feuille 2, après translation de la barre 4, est introduite dans le poste de trempe en position verticale, toujours maintenue par les pinces 3. Le poste de trempe comprend des caissons 6 du type à pression élevée et équipés de tuyauteries d'alimentation reliées à une réserve non représentée de gaz généralement de l'air sous pression. Ils sont d'autre part munis d'un certain nombre de tuyères 7 et dans lesquelles selon le schéma de la figure 4 pénètrent d'une part du gaz sous pression, d'autre part un liquide de façon à obtenir un mélange diphasique en l'état convenant pour l'invention au niveau du col de la tuyère comme cela a été précédemment indiqué.

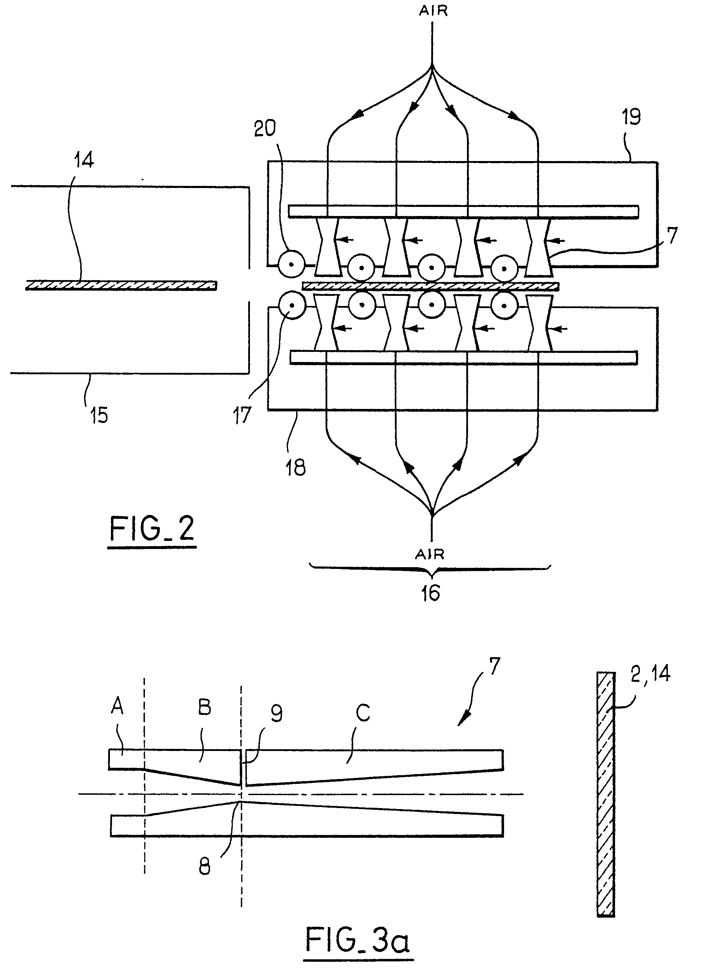

Les tuyères 7 sont du type représenté à la figure 3. Elles sont mises en forme par moulage de polyuréthane autour d'un noyau de la forme de la tuyère habituellement en laiton.

Comme cela apparaît sur les figures 3a et 3b la tuyère présente une première partie cylindrique A de diamètre 11 mm sur une longueur de 10 mm. Puis le cylindre se rétrécit en formant un cône B convergent de 20 mm de long jusqu'à atteindre un diamètre de 4 mm sur une longueur de 5 mm, correspondant au col de la tuyère. Le col se prolonge par un cône C divergent d'une longueur de 60 mm et dont la base a une largeur correspondant au diamètre du cylindre de départ, soit 11 mm. Une gouttière 9 est percée au niveau du col de la tuyère pour permettre l'injection du liquide. Son diamètre est de l'ordre de 0,8 mm environ. Ces caractéristiques dimensionnelles sont données à titre d'exemple non limitatif.

On peut disposer, le long des caissons 6, plusieurs tuyères 7 de ce type, suivant les dimensions des feuilles de verre à tremper. Grâce à l'angle d'ouverture de la tuyère, à son extrémité par laquelle est projeté le jet contre le verre, on obtient une surface d'impact plus importante qu'avec les dispositifs usuels, ce qui permet de diminuer la quantité de tuyères nécessaires. En outre, une bonne homogénéisation de la trempe est assurée.

Le montage de la figure 4 indique schématiquement le mode de formation du mélange de gaz, généralement de l'air, et de liquide sous forme très finement divisée.

Lorsqu'on souffle le jet diphasique sur le verre, l'injection du liquide non atomisé se fait au niveau du col 8 de la tuyère à l'aide d'un injecteur 10 et d'une aiguille 11 par exemple de diamètre extérieur 0,8 mm dans le cas de la tuyère ayant les dimensions indiquées ci-dessus. Afin de régler avec la meilleure précision possible le débit de liquide pour se placer à la limite du régime non mouillant, il s'est avéré avantageux de disposer une vanne 12 de distribution le plus près possible de la tuyère sur le circuit. Le liquide est alors injecté transversalement par rapport à l'axe de la tuyère.

Pour permettre une vitesse sonique d'éjection du mélange diphasique, il convient d'alimenter les tuyères en gaz sous une pression relative au moins égale à 0,910 bar, puisque c'est cette pression qui est génératrice de l'onde de choc. Toutefois pour des raisons de commodité de réglage, et étant donné que l'onde de choc est également engendrée par des pressions légèrement supérieures à 0,910 bar, on choisit d'alimenter les tuyères en gaz sous une pression de 1 bar. Il est bien entendu possible d'obtenir à la sortie de ces tuyères un mélange à vitesse supersonique en les alimentant sous une pression plus élevée en gaz, mais pour éviter des dépenses d'énergie et empêcher la formation d'ondes multiples, qui pourraient interagir, on préfère ne rechercher qu'une vitesse sonique et on limite la pression relative d'alimentation des caissons 6 et des tuyères 7 à 1 bar environ. Le liquide doit être introduit avec une pression supérieure à celle du gaz. Au moment de son arrivée dans l'onde de choc le liquide est finement divisé et forme un brouillard de particules ayant un diamètre de l'ordre du micron; on dit qu'il s'atomise.

De tels jets diphasiques peuvent être appliqués à la trempe de plaques de verre maintenues en position verticale. On décrit ci-après un exemple de trempe verticale.

Le gaz est de l'air et le liquide atomisé est de l'eau. Le poste de trempe de la figure 1 est alors placé le plus près possible de la sortie du four 1 de trempe. Un volume de verre 2 de 2,9 mm d'épaisseur sort du four à une température de 650 °C environ par exemple par levage du système de préhension 3, 4, et on le place verticalement entre les tuyères 7. La distance entre le verre et l'extrémité des tuyères est de 70 mm. On injecte dans les tuyères axialement de l'air sous une pression de 1 bar, et radialement de l'eau avec un débit de 1,1 l/h par tuyère. Une vanne 13 d'alimentation en eau prélève l'eau sur les circuits usuels de distribution. L'air comprimé est disponible usuellement à une pression d'environ 6 bars. On prévoit donc, comme cela est indiqué à la figure 4, un détendeur D permettant de passer de 6 bars à 1 bar sur le branchement au circuit général d'air comprimé.

On a pu mettre en évidence dans les conditions de cet exemple les avantages d'un jet diphasique par rapport à un jet simple d'air sonique par comparaison des coefficients d'échange thermique, pour des pressions identiques d'air incident.

Pour quantifier l'amélioration apportée par la présence d'un jet diphasique, on a suivi l'évolution des températures au cours du refroidissement par une tuyère unique, d'un échantillon de verre de 100 × 100 mm et d'une épaisseur de 2,9 mm, l'alimentation en eau étant successivement ouverte puis fermée.

On utilise pour cela un cylindre de bronze chaud dont l'axe est dans le prolongement de l'axe de la tuyère et dans l'épaisseur duquel on introduit trois thermocouples reliés à un enregistreur. On fait à chaque fois plusieurs mesures à différents niveaux d'épaisseur le long de l'axe du cylindre pour établir une valeur moyenne représentative de l'échange thermique étudié.

On relie les valeurs de température obtenues grâce aux thermocouples, aux coefficients d'échange thermique, grâce à l'équation de Fourier, et on obtient les résultats suivants:
– jet diphasique:
coefficient d'échange thermique: 0,25 $J/m^2 °Cs$ (0,0602 $cal/m^2 °Cs$)
– jet simple:
coefficient d'échange thermique: 0,015 $J/m^2 °Cs$ (0,0036 $cal/m^2 °Cs$)

Il apparaît donc un rapport 16 entre les deux coefficients ce qui traduit l'intérêt considérable du jet diphasique et donc du procédé de trempe selon l'invention.

Des jets diphasiques peuvent aussi être utilisés pour temper des plaques de verre disposées horizontalement. On décrit ci-après un exemple de trempe horizontale.

On utilise cette fois le dispositif représenté à la figure 2. Des feuilles de verre 14 délivrées à 650 °C par le four de chauffage 15 défilent à plat dans le poste de trempe 16 sur des galets de support 17 portés par un châssis inférieur 18. Un châssis supérieur 19 réglable en hauteur par rapport au châssis inférieur est également équipé de galets 20 de maintien des feuilles de verre. En position de travail, le châssis supérieur 19 est abaissé comme montré à la figure 4, de façon à laisser entre les galets inférieurs 17 et les galets supérieurs 20 seulement l'espace nécessaire au passage des feuilles de verre 14, les galets supérieurs 20 maintenant alors lesdites feuilles de verre appliquées sur les galets inférieurs 17. Les tuyères de soufflage 7 sont intercalées entre les galets et disposées sur les deux faces des plaques de verre. Elles sont alimentées d'une manière analogue à celle décrite en relation avec la figure 1.

Comme dans l'exemple précédent on se placera en deçà du régime mouillant.

On peut aussi injecter des quantités d'eau identiques à celles injectées dans l'exemple de trempe verticale.

Dans les exemples décrits on a prévu de disposer des tuyères 7 en regard des deux faces des plaques de verre; on peut aussi ne prévoir des tuyères 7 que sur une seule face.

## Revendications

1. Procédé de trempe de volumes de verre dans lequel on souffle un jet, par des tuyères, sur au moins une des faces des volumes de verre, ledit jet comprenant un gaz et de l'eau, caractérisé en ce qu'on alimente les tuyères, d'une part, en gaz sous une pression au moins égale à 0,910 bar qui autorise une vitesse au moins sonique du jet à sa sortie des tuyères et d'autre part, en eau et on atomise l'eau, lors de son passage dans les tuyères, par traversée d'une onde de choc produite à l'intérieur des tuyères, l'alimentation en eau ayant lieu légèrement en amont du lieu où se produit l'onde de choc et le débit de l'eau injectée étant réglé de façon à se placer à la limite du régime non mouillant et du régime mouillant.

2. Procédé selon la revendication 1, caractérisé en ce que le gaz est de l'air.

3. Procédé selon la revendication 1 ou 2, caractérisé en ce que le débit de l'eau est de l'ordre de 1,1 l/h par tuyère.

4. Procédé selon l'une des revendications 1 à 3, caractérisé en ce que pour tremper verticalement des feuilles de verre, on dispose l'extrémité des tuyères à 70 mm environ des feuilles de verre.

5. Procédé selon l'une des revendications 1 à 4, caractérisé en ce que les volumes de verre sont des feuilles de verre ayant une épaisseur inférieure à 3 mm.

## Claims

1. A method of tempering glass volumes in which a jet is blown, through ducts, on to at least one of the surfaces of the glass volumes, said jet comprising a gas and water, characterised in that the ducts are fed, on the one hand, with a gas under a pressure of at least 0.910 bar which allows a jet speed which is at least sonic at the outlets of the ducts, and on the other hand with water and the water is atomised as it passes through the ducts by passage of a shock wave produced inside the ducts, the water being fed at a point slightly upstream of the point where the shock wave is produced and the rate of feed of injected water being controlled so that it is at the limit of the non-wetting condition and the wetting condition.

2. A method according to claim 1, characterised in that the gas is air.

3. A method according to claim 1 or 2, characterised in that the feed of water is of the order of 1.1 l/h per duct.

4. A method according to any one of claims 1 to 3, characterised in that in order to temper the glass sheets vertically, the end of the ducts is arranged about 70 mm from the glass sheets.

5. A method according to any one of claims 1 to 4, characterised in that the glass volumes are glass sheets having a thickness less than 3 mm.

## Patentansprüche

1. Verfahren zum Vorspannen von Scheiben aus Glas, bei welchem mittels Düsen ein Strahl aus Gas und Wasser auf mindestens eine der Seiten der Glasscheiben geblasen wird, dadurch gekennzeichnet, daß die Düsen einerseits mit Gas unter einem Druck von mindestens gleich 0,910 bar gespeist werden, um dem Strahl am Düsenaustritt zumindest Schallgeschwindigkeit zu vermitteln, und andererseits mit Wasser gespeist werden, welches bei seinem Durchlauf in den Düsen infolge Durchgangs einer im Inneren der Düse erzeugten Schockwelle atomisiert wird, wobei die Wassereinspeisung leicht stromaufwärts von der Stelle erfolgt, an der die Schockwelle erzeugt wird, und die eingespritzte Mengenleistung von Wasser derart geregelt wird, daß das Wasser sich im Grenzbereich von nicht benetzendem/benetzendem Zustand befindet.

2. Verfahren nach Anspruch 1, dadurch gekennzeichnet, daß das Gas Luft ist.

3. Verfahren nach Anspruch 1 oder 2, dadurch gekennzeichnet, daß die Mengenleistung an Wasser im Bereich von 1,1 l/h pro Düse liegt.

4. Verfahren nach einem der Ansprüche 1 bis 3, dadurch gekennzeichnet, daß für die vertikale Vorspannung von Glasscheiben das Ende der Düsen etwa 70 mm von den Glasscheiben angeordnet ist.

5. Verfahren nach einem der Ansprüche 1 bis 4, dadurch gekennzeichnet, daß die Glasscheiben Scheiben mit einer Dicke kleiner als 3 mm sind.

# FIG_1

EAU

AIR

AIR

6

6

2

7

8

5

4

3

2

1'

1'

1

AIR

## FIG_2

AIR

## FIG_3a

FIG. 3b

FIG. 4